# EUROPEAN PATENT APPLICATION

(11) **EP 2 287 773 A1**
(43) Date of publication of application: **23.02.2011**
(21) Application number: 09167745.0
(22) Date of filing: 12.08.2009
(51) Int. Cl.: G06F 21/20

(54) **Method and apparatus for controlling access to a computing device**

(71) Applicant: RESEARCH IN MOTION LIMITED, Waterloo, Ontario N2L 3W8 (CA)
(72) Inventor: Courtney, Sean, Alexander, Waterloo Ontario N2L 5Z5 (CA)
(74) Representative: MERH-IP Matias Erny Reichl Hoffmann

(57) **Abstract**

A computing device (101) having controlled access and a method for controlling access there to are provided, the computing device (101) comprising a memory device, a display device, and an input device. Data for rendering a map is retrieved from the memory device. The display device is controlled to render the map using the data. Geographic location data representative of a sequence of geographic locations selected from the map is received, via the input device. The geographic location data is converted to received password data. The received password data is compared to stored password data. If a match is found, access is granted to the computing device (101).

## Description

### FIELD

The specification relates generally to computer security, and specifically to a method and apparatus for controlling access to a computing device.

### BACKGROUND

Access to computing devices is generally controlled via passwords. Complex passwords inherently offer greater security, though such complex passwords, comprising for example a random series of numbers, letters (both upper and lower case), and non alpha numeric characters, can be difficult to remember. The tendency then is for simple passwords to be chosen, which leads to security breaches and potential loss of sensitive data and/or damage to the computing device as simpler passwords are easier for malicious software to breach.

### SUMMARY

A first aspect of the specification provides a method for controlling access to a computing device comprising a memory device, a display device, and an input device. The method comprises retrieving, from the memory device, data for rendering a map. The method further comprises controlling the display device to render the map using the data. The method further comprises receiving, via the input device, geographic location data representative of a sequence of geographic locations selected from the map. The method further comprises converting the geographic location data to received password data. The method further comprises comparing the received password data to stored password data; and, if a match is found, granting access to the computing device.

Converting the geographic location data to the received password data can comprise at least one of concatenating the geographic location data, applying a hash function to the geographic location data, and retrieving the received password data from a lookup table using the geographic location data.

The map can comprise a rendered globe.

The method can further comprise at least one of controlling the display device to provide a representation of controls for navigating the map, and controlling the display device to provide a representation of controls for indicating a classification of each geographic location in the sequence of geographic locations. The controls for indicating a classification of each the geographic location can comprise at least one of a slider, and at least one pulldown menu. The classification can comprise at least one of Continent, Country, State, Province, City and Geographic Landmark.

Receiving the geographic location data can comprise receiving a plurality of display device coordinates from the input device and converting the display screen coordinates to the geographic location data based on the data for rendering the map.

The geographic location data can comprise at least one of names of the geographic locations, coordinates identifying a point on the map, data identifying an area of the map, and data identifying hotzones on the map.

The method can further comprise controlling the display device to provide a sequence of prompts, each prompt of the sequence of prompts requesting entry of a respective geographic location in the sequence of geographic locations, each prompt of the sequence of prompts comprising a respective ordinal indication.

The method can further comprise a provisioning process for determining the access password data. The provisioning process can comprise: receiving geographic location provisioning data representative of the sequence of geographic locations selected from the map; converting the geographic location provisioning data to the access password data by at least one of concatenating the geographic provisioning location data, applying a hash function to the geographic provisioning location data, and retrieving the received password data from a lookup table using the geographic location data; and storing the access password data.

A second aspect of the specification provides a computing device configured for controlled access. The computing device comprises a processing unit interconnected with a memory device, a display device and an input device. The processing unit is enabled to: retrieve, from the memory device, data for rendering a map; control the display device to render the map using the data; receive, via the input device, geographic location data representative of a sequence of geographic locations selected from the map; convert the geographic location data to received password data; and compare the received password data to stored password data; and, if a match is found, grant access to the computing device.

To convert the geographic location data to the received password data, the processing unit can be further enabled for at least one of concatenating the geographic location data, applying a hash function to the geographic location data, and retrieving the received password data from a lookup table using the geographic location data.

The map can comprise a rendered globe.

The processing unit can be further enabled to at least one of control the display device to provide a representation of controls for navigating the map, and control the display device to provide a representation of controls for indicating a classification of each geographic location in the sequence of geographic locations. The controls for indicating a classification of each the geographic location can comprise at least one of a slider, and at least one pulldown menu. The classification can comprise at least one of Continent, Country, State, Province, City and Geographic Landmark.

To receive the geographic location data the processing unit can be enabled to receive a plurality of display device coordinates from the input device and convert the display screen coordinates to the geographic location data based on the data for rendering the map.

Geographic location data can comprise at least one of names of the geographic locations, coordinates identifying a point on the map, data identifying an area of the map, and data identifying hotzones on the map.

The processing unit can be further enabled to control the display device to provide a sequence of prompts, each prompt of the sequence of prompts requesting entry of a respective geographic location in the sequence of geographic locations, each prompt of the sequence of prompts comprising a respective ordinal indication.

The processing unit can be further enabled to implement a provisioning process for determining the access password data, the provisioning process comprising: receiving geographic location provisioning data representative of the sequence of geographic locations selected from the map; converting the geographic location provisioning data to the access password data by at least one of concatenating the geographic provisioning location data, applying a hash function to the geographic provisioning location data, and retrieving the received password data from a lookup table using the geographic location data; and storing the access password data.

A third aspect of the specification provides a computer-readable medium comprising program instructions for causing a computing device to control access there to, the computing device comprising a memory device, a display device, and an input device, the program instructions for controlling the computing device to: retrieve, from the memory device, data for rendering a map; control the display device to render the map using the data; receive, via the input device, geographic location data representative of a sequence of geographic locations selected from the map; convert the geographic location data to received password data; and compare the received password data to stored password data; and, if a match is found, grant access to the computing device.

### BRIEF DESCRIPTIONS OF THE DRAWINGS

Embodiments are described with reference to the following figures, in which:

Fig. 1 depicts a block diagram of a computing device enabled for access control via geographic location password entry, according to non-limiting embodiments;

Fig. 2 depicts a method for controlling access to a computing device via geographic location password entry, according to non-limiting embodiments;

Fig. 3 depicts representation of a log-in screen at the computing device of Fig. 1, according to non-limiting embodiments;

Fig. 4 depicts a representation of a geographic location password entry screen provided at the computing device of Fig. 1, according to non-limiting embodiments;

Fig. 5 depicts the computing device of Fig.1 receiving and processing graphical location data to produce password data, according to non-limiting embodiments;

Figs. 6 to 10 depict representations of geographic location password entry screens provided at the computing device of Fig. 1, according to non-limiting embodiments; and

Fig. 11 depicts a method for provisioning access password data, according to non-limiting embodiments.

### DETAILED DESCRIPTION OF THE EMBODIMENTS

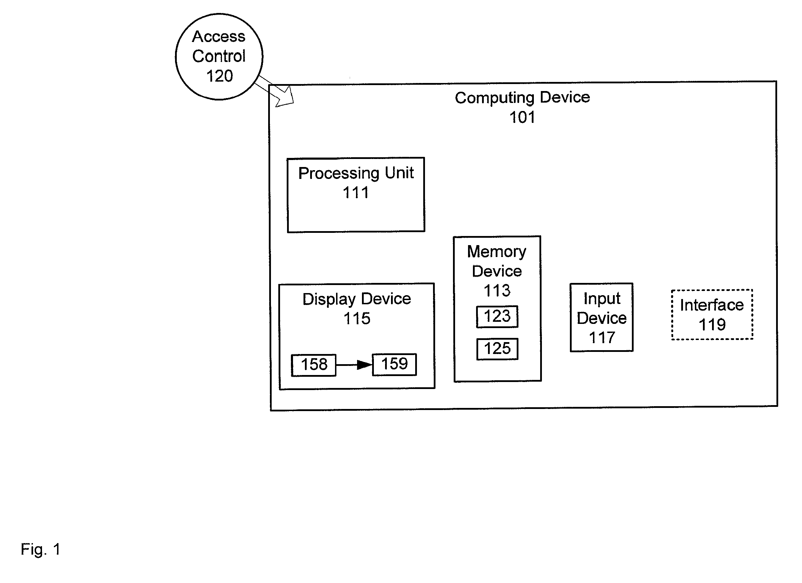

Figure 1 depicts a computing device computing device 101 enabled for access control, according to non-limiting embodiments. Computing device 101 generally comprises a processing unit 111 interconnected with a memory device 113, a display device 115, an input device 117 and, in some embodiments, a communications interface 119. Although input device 117 and display device 110 are depicted as integrated into computing device 101, in other embodiments, input device 117 and display device 110 can be realized as discrete elements external to, and in communication with, computing device 101. Furthermore, processing unit 111 can be interconnected with memory device 113, display device 115, input device 117 and, if present, communications interface 119, via a suitable computer interconnect (not depicted), which may, for example and without limitation, be a bus, a serial interface such as SCI, or any appropriate interconnect. Processor 111 can comprise any suitable processor, including but not limited to a central processing unit (CPU).

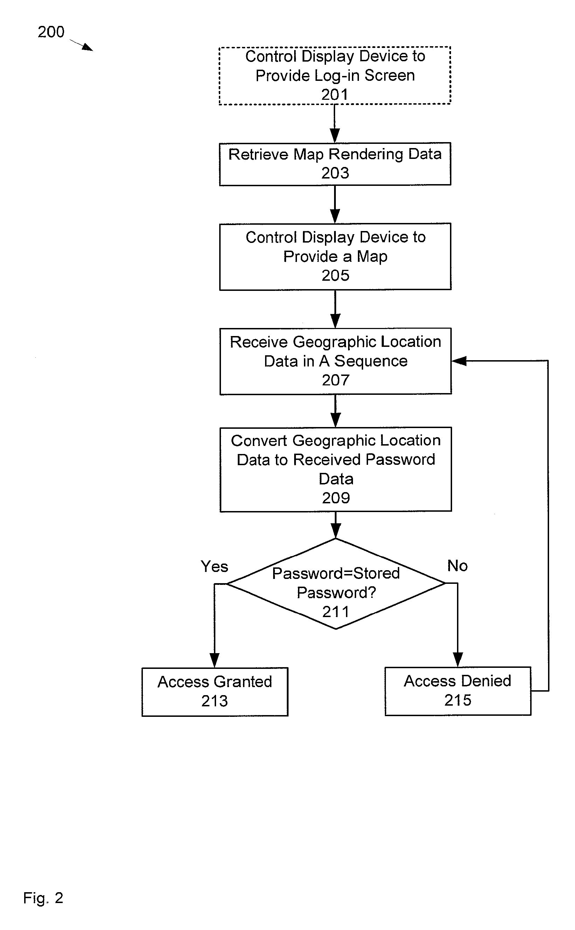

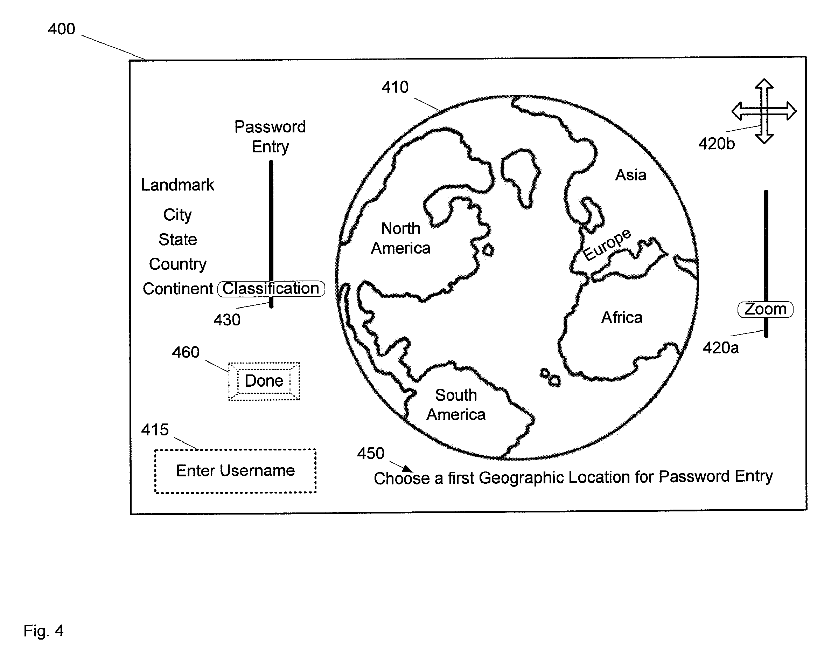

Computing device 101 further comprises an access control application 120 for controlling access to computing device 101. For example, access control application 120 can control access to computing device 101 upon start-up, when log-in is required to access and/or unlock computing device 101, when computing device 101 is locked, and/or any embodiment where a password is requested for access to computing device 101. In general, access control application 120 can be stored in memory device 113 and processed by processing unit 113. Furthermore, access control application 120 is enabled to compare a received password with an access password 123 stored in memory device 113. Access control to computing device 101 is generally enabled via a map rendered at display device 115 using map data 125 stored in memory device 115 (e.g. as depicted in Figure 4). For example, computing device 101 is enabled to receive a password, via input data from input device 117 and a map rendered at display device 115, as will be described below with reference to Figure 2.

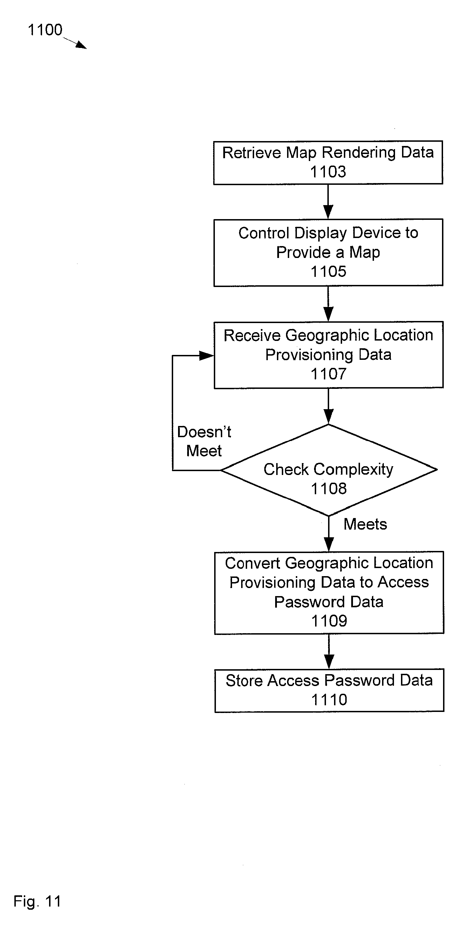

Memory device 113 is enabled for storing access password 123 and map data 125. Memory device 113 can comprise any suitable memory device, including but not limited to random access memory (RAM), EPROM, EEPROM, FLASH, removable memory, memory cards, hard disks, and the like. In other embodiments, access password 123 and map data 125 can be stored on an external memory device (not depicted) and accessed via communication interface 119, as desired. In some embodiments, access password 123 can be created via a provisioning process described below with reference to Figure 11, while in other embodiments access password 123 is received via communication interface 119, for example from a computing device acting designated as a system administrator.

It is further understood that map data 125 can comprise any suitable combination of names and coordinates of geographic locations, stored in any suitable format, for rendering a map at display device 115. For example, map data 125 can store names of continents, countries, states, provinces, cities, towns, street names, geographic landmarks, and the like, and coordinates therefor, including but not limited to coordinates for rendering geographic and/or geopolitical borders. Furthermore, map data 125 can be updated as desired, for example by requesting updates from a map server (not depicted), and the like, via communication interface 119.

Display device 115 generally incorporates one or more display elements, which may include without limitation any one, or a combination of: a flat panel display of any type (e.g. a liquid crystal display (LCD), plasma, vacuum-fluorescent display, arrays of light-emitting diodes, and the like); a cathode ray tube (CRT); a computer monitor; and the like. Display device 115 comprises circuitry 158 for generating a representation 159 of data including but not limited to graphical user interfaces (GUI), and in particular a representation of access control application 120, including but not limited to a rendering of a map. Circuitry 158 can include any suitable combination of circuitry for controlling the display elements, including but not limited to display buffers, transistors, electron beam controllers, LCD cells, plasmas cells, phosphors etc. Moreover, display device 115 and circuitry 158 can be controlled by processor 111 to generate representation 159.

Input device 117 can comprise any suitable input device for accepting input data including but not limited to button(s), a touchscreen, a keyboard, a track ball, a scroll wheel and/or a combination. In particular, in some embodiments, the input device 117 enables receipt of geographic location data representative of a plurality of geographic locations selected from a rendered map as will be described below with reference to Figure 2.

Interface 119, if present, can comprise any suitable combination of wired or wireless interface as desired.

Computing device 101 comprises any suitable computing device to which access can be controlled via a password, including but not limited to a personal computer, a laptop computer, a personal digital assistant (PDA), a portable communications device, a portable computing device, a mobile telephone and the like.

Attention is now directed to Figure 2 which depicts a method 200 for controlling access to a computing device. In order to assist in the explanation of the method 200, it will be assumed that the method 200 is performed using computing device 101. Furthermore, the following discussion of method 200 will lead to a further understanding of computing device 101 and its various components. However, it is to be understood that computing device 101 and/or method 200 can be varied, and need not work exactly as discussed herein in conjunction with each other, and that such variations are within the scope of present embodiments.

In general method 200 can be implemented on computing device 101 as a geographic location password entry process. In particular, by receiving geographic location data, from a rendered map, the geographic location data comprising identifiers of a sequence of geographic locations, and the geographic location data, suitably processed, can be used as a password for access to computing device 101.

In the following description of method 200, it understood that access password 123 has been previously been provisioned and stored in memory device 113, for example using method 1100 described with reference to Figure 11, and/or received via communication interface 119.

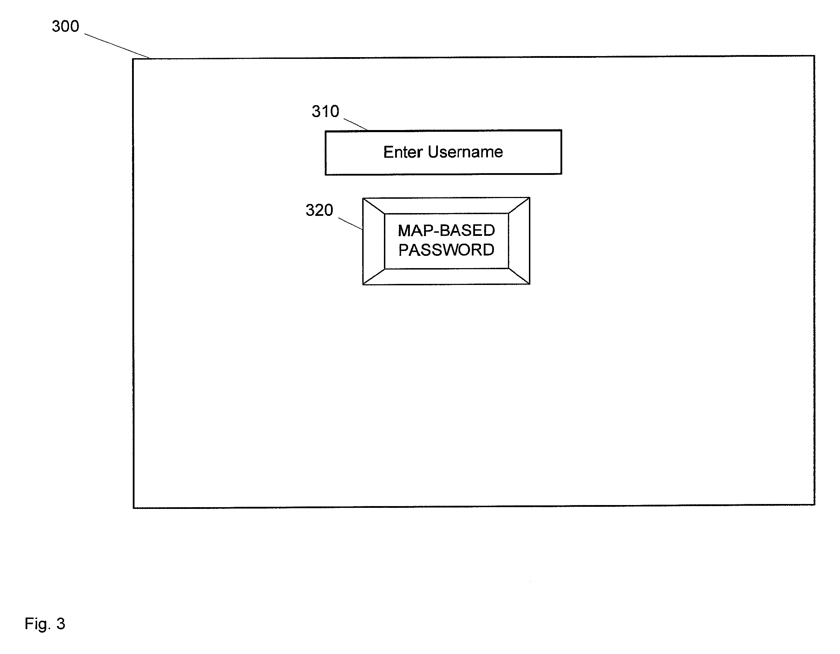

It is further understood that access to computing device 101 is being controlled, for example via access control application 120, and hence computing device 101 is initially locked and/or log-in is being requested. Hence, in some embodiments, at step 201 display device 115 is controlled by processing unit 111 to provide a representation 300 of a log-in screen, as depicted in Figure 3 according to non-limiting embodiments. In some embodiments, representation 159 comprises representation 300. Representation 300 comprises a text entry box 310 wherein a user name can be received, for example via receipt of data via input device 117. Representation 300 further comprises a virtual button 320 which can be actuated via receipt of data via input device 117. In these embodiments, actuation of button 320 causes computing device 101 to request a password via rendering of a map, described hereafter.

At step 203, data 125 for rendering a map is retrieved from memory device 113. In some embodiments, step 203 can be implemented upon actuation of button 320, however in other embodiment, step 203 can be implemented upon start-up of computing device 101 and/or when computing device 101 is locked.

At step 205, processing unit 111 controls display device 115 to provide a representation 400, including but not limited to rendering a map 410 using data 125, as depicted in Figure 4, according to non-limiting embodiments. In some embodiments, representation 159 comprises representation 400. In depicted embodiments, map 410 comprises a rendered globe, however in other embodiments map 410 can comprise a projection map, including but limited to a Mercator projection. Map 410 generally comprises a rendering of geographic and/or geopolitical borders, based on data 125. Map 410 can also comprise names of geographic locations, as retrieved from data 125; for example embodiments of map 410 depicted in Figure 4 comprise the names of continents visible on map 410 (e.g. "North America", "South America", "Africa", "Europe", "Asia").

In general it is understood that controlling display device 115 to provide representation 400 initiates geographic location password entry.

It is understood that in some embodiments, the zoom level of map 410 can be controlled and the detail of depicted borders can be controlled based on zoom level; in addition the number of names of geographic locations can also be controlled based on zoom level (e.g. at higher zoom levels names of geographic locations having smaller areas are provided, while at lower zoom locations names of geographic locations having smaller areas are not provided).

Representation 400 can further comprise a representation of controls 420a and 420b (collectively controls 420 and generically a control 420) for navigating map 410. For example, in the depicted embodiments, representation 400 comprises a control 420a for zooming into and out of map 410, and a control 420b for moving east, west, north or south on map 410. In other embodiments, representation 400 can comprise a control (not depicted) for rotating map 410 in a desired direction (e.g. for rotating a globe). In depicted embodiments, control 420a comprises a slider, wherein moving the slider up (e.g. based on input data received at input device 117) causes the zoom level of map 410 to increase such that greater detail of geographic borders, names and or landmarks are depicted on map 410. Furthermore, control 420b comprises four arrows pointing in directions representative of east, west, north and south: each arrow can be individually activated causing map 410 to move in the actuated direction (and or rotate map 410 in the actuated direction, in embodiments where map 410 comprises a rendered globe). However, it is understood that neither the number of controls 420 and the type of each control 420 is not to be considered particularly limiting. Furthermore, in some embodiments, controls 420 are absent.

In some embodiments, representation 400 can further comprise a text entry box 415 for entering a username, similar to text entry box 310. For example, representation 400 can comprise text entry box 415 in embodiments where step 201 is not implemented (and hence representation 300 is not provided).

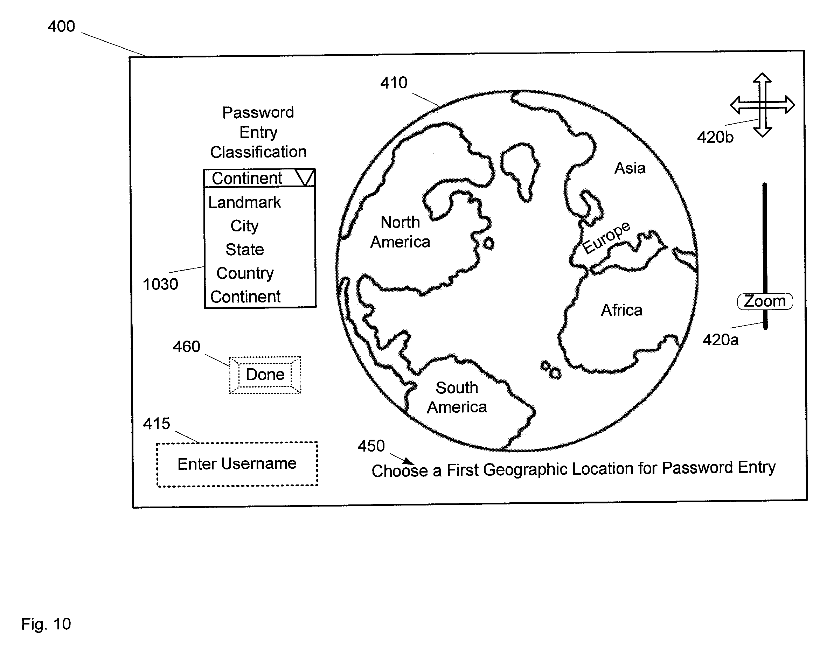

Representation 400 can further comprise a representation of a control 430 for indicating a classification of a geographic location that is to be selected, as described below. While in depicted embodiments, control 430 comprises a slider, in other embodiments, control 430 can comprise at least one pulldown menu, for example pulldown menu 1030 as depicted in Figure 10 (substantially similar to Figure 3 with like elements having like numbers). Furthermore, the classification of a geographic location can comprise at least one of a continent, a country, a state, a province, a city, a town, street names and a geographic landmark (though in depicted embodiments only continents, countries states, cities and landmarks are realized in control 430). Embodiments using control 430 are described below. In some embodiments, control 430 causes map 410 to be divided into a plurality of hotzones (i.e. an area of an onscreen object that a pointer's hot spot (e.g. the tip of pointer 610 must be within for clicks (e.g. mouse clicks), and the like, to have an effect): for example if control 430 is set to "Continent", map 410 is divided into seven hotzones, each representative of a different continent. In some embodiments, each hotzone can be discrete with, for example, "clicks" in oceans having no effect.

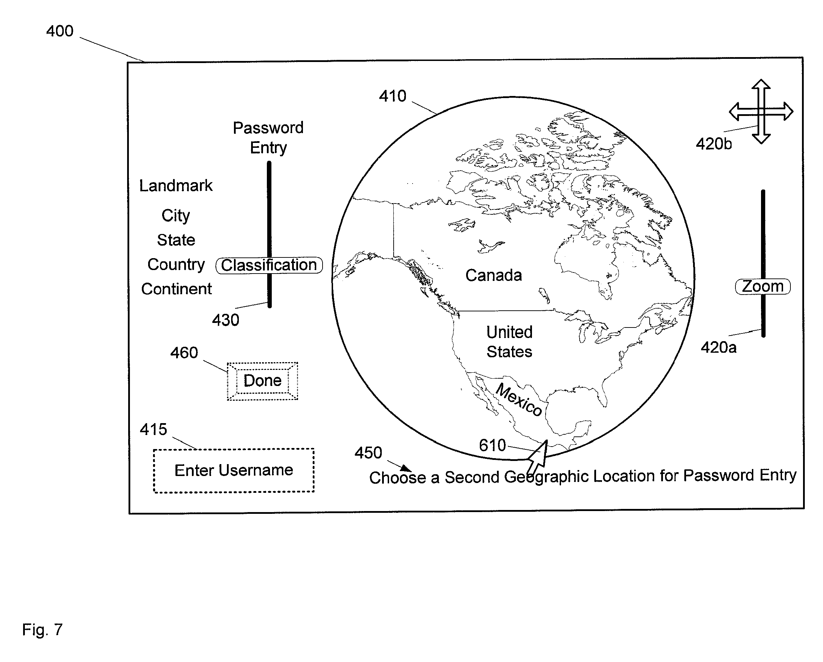

In some embodiments, representation 400 can further comprise instructions 450 to "Choose a First Geographic Location for Password Entry", and the like. For subsequent password entries, instructions 450 are updated to prompt for a second geographic location entry, then a third geographic location entry, and so on (e.g. as depicted in Figures 7, 8 and 9, described below). In other words, display device 115 is controlled to provide a sequence of prompts, each prompt of the sequence of prompts requesting entry of a respective geographic location in the sequence of geographic locations, each prompt of the sequence of prompts comprising a respective ordinal indication, or an "Nth" indication. Hence, in general, instructions 450 can comprise instructions to at least one of enter a geographic location N, enter the Nth geographic location, and the like. In general, the sequence of prompts can be understood as a sequence of ordinal prompts.

In yet further embodiments, representation 400 can further comprise a virtual button 460, actuation of such being indicative that password entry is complete.

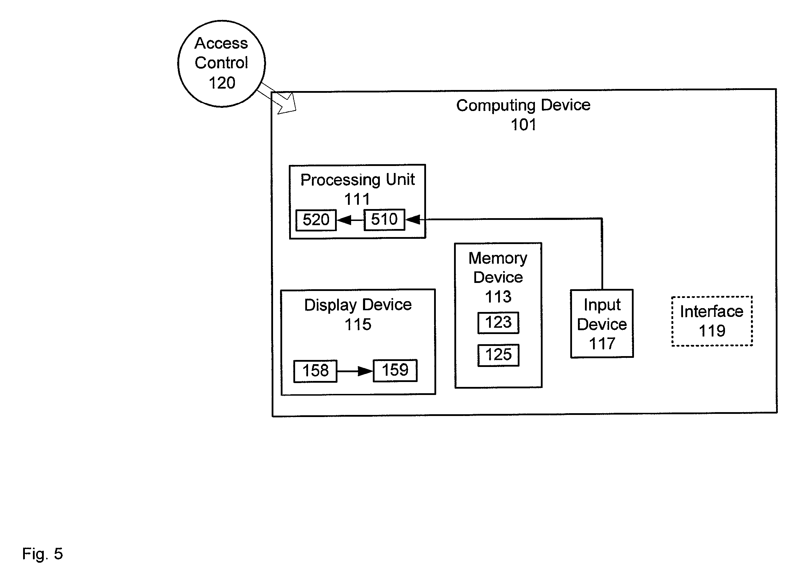

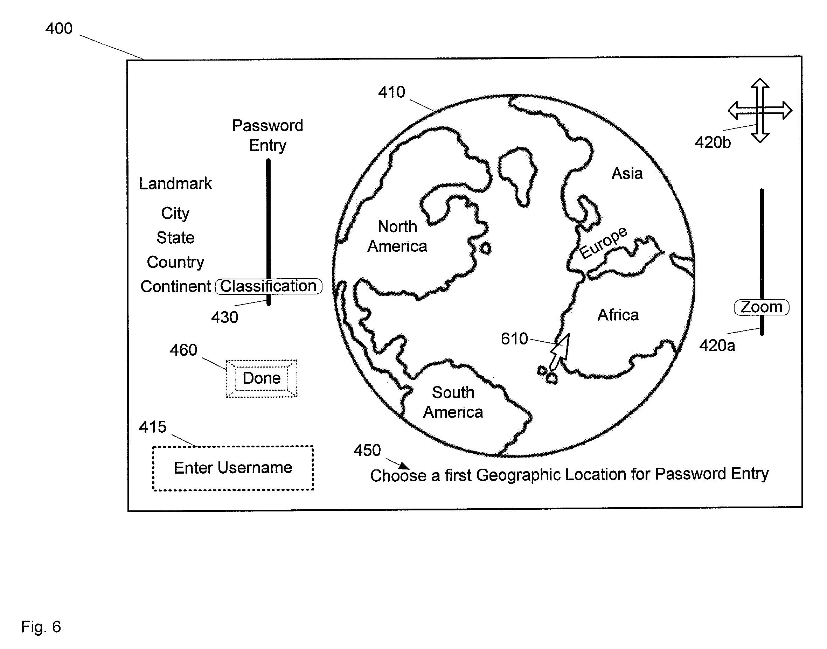

Returning to Figure 2 (and with reference to Figure 5), at step 207, geographic location data 510 (described below) is received via input device 117, geographic location data 510 representative of a sequence of geographic locations selected from map 410. Step 205 is now described with reference to Figures 5 to 9: Figure 5 is substantially similar to Figure 1, with like elements having like numbers; and Figures 6 to 9 are each substantially similar to Figure 4, with like elements having like numbers.

As depicted in Figure 5, geographic location data 510 is received via input device 117. For example, it is understood in the following description that receiving geographic location data 510 comprises receiving a plurality of display device coordinates from input device 117 and converting the display device coordinates to geographic location data 510 based on data 125. For example, with reference to Figure 6, input data can be received via input device 117 to control display device to position a representation of a pointer 610 on a first geographic location, for example "Africa". Further input data can be received via input device 117 to indicate that the first geographic location has been selected. For example, if input device 117 comprises a mouse, the mouse can be used to position pointer 610 over the first geographic location and a "right click" can be used to indicate the selection of the first geographic location. The display device coordinates corresponding to the tip of pointer 610 can be processed and correlated with data 125 to determine the geographic region in map 410.

In the depicted embodiments, it is understood that the first geographic location comprises a continent, as control 430 is set to "Continent" (i.e. data has been received via input device 117 that display device 115 is to be controlled to change control 430 to indicate "Continent"). Furthermore, it is understood that "Africa" (i.e. a continent) is selected as the first geographic location as the tip of pointer 610 is within the boundaries of "Africa" on map 410, the boundaries of "Africa" defined by map data 125. It is further understood that an identifier of the first geographic location can then be temporarily stored in memory device 113 and/or in processing unit 111. The identifier of the first geographic location can comprise any suitable identifier, including but not limited to a name of the first geographic location (e.g. "Africa"), suitable coordinates of the first geographic location (e.g. any suitable longitude and latitude, and the like. In some embodiments, an identifier of the first geographic location can comprise numerical identifiers of each geographic location defined within data 125 (e.g. each continent, country, state, province, city, etc. can each be assigned a given number within data 125).

As depicted in Figure 7, a second geographic location can be selected in a similar manner, however in Figure 7 controls 420 have been used to zoom into a particular area of map 410 (specifically Canada, the United States and Mexico) and furthermore control 430 has been set to "Country", indicating that the second geographic location to be selected is a country. Hence, display device 115 has been controlled to render map 410 with names of countries within the area that has been zoomed into. Furthermore, instructions 450 have been updated to indicate that a second geographic location for password entry is to be chosen (i.e. a second prompt in a sequence of prompts). In depicted exemplary embodiments, the second geographic location is "Mexico" (i.e. a country) as the tip of cursor 601 is within the boundaries of "Mexico" as defined by map data 125. It is understood that an identifier of the second geographic location can then be temporarily stored in memory device 113 and/or in processing unit 111.

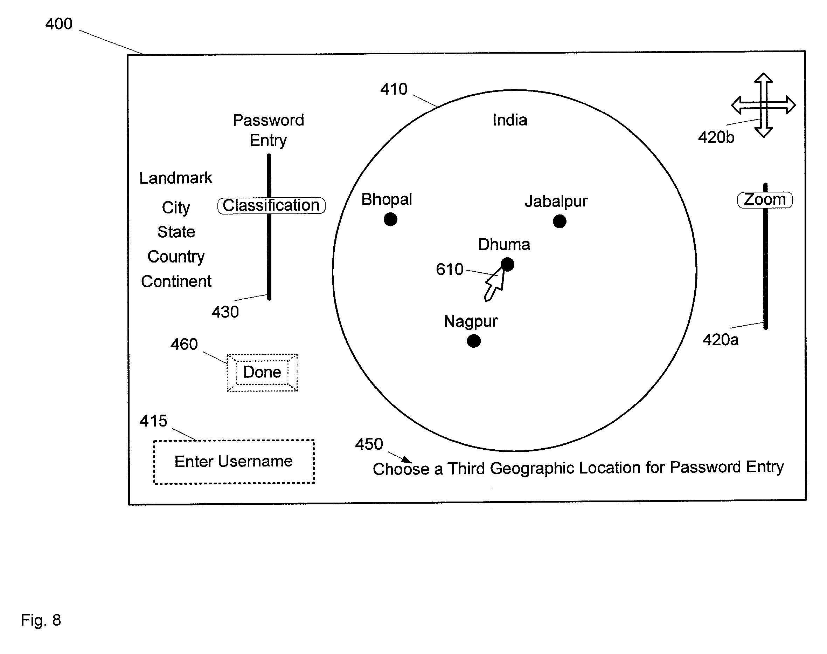

As depicted in Figure 8, a third geographic location can be selected in a similar manner, however in Figure 8 controls 420 have been used to zoom into a particular area of map 410 (specifically a central region of India) and furthermore control 430 has been set to "City", indicating that the third geographic location to be selected is a city. Hence, display device 115 has been controlled to render map 410 with names of cities within the area that as been zoomed into. Furthermore, instructions 450 have been updated to indicate that a third geographic location for password entry is to be chosen (i.e. a third prompt in a sequence of prompts). In depicted exemplary embodiments, the second geographic location is "Dhuma" (i.e. a city in India) as the tip of cursor 601 is located within a circle representative of the location of "Dhuma" as defined by map data 125. It is understood that an identifier of the third geographic location can then be temporarily stored in memory device 113 and/or in processing unit 111.

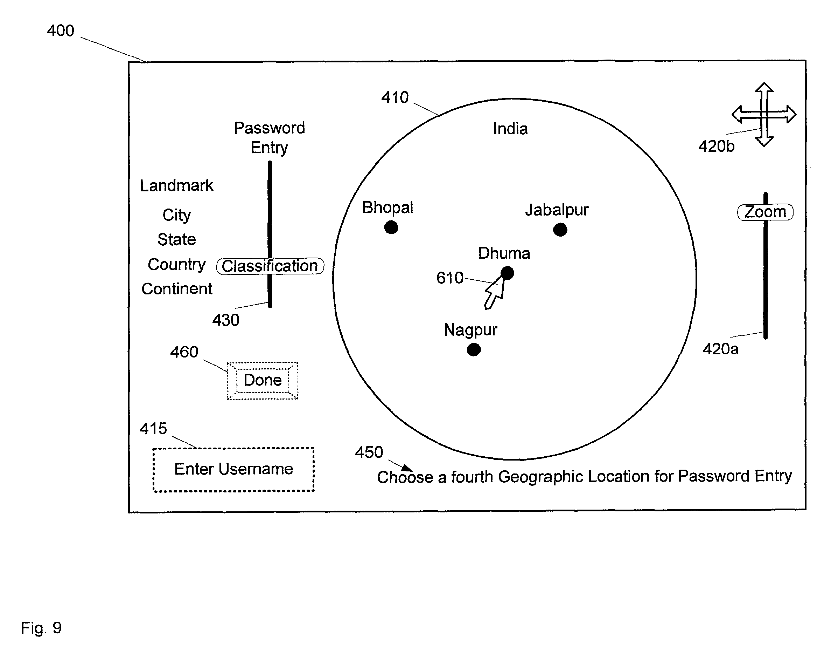

It is understood that the country "India" is also identified on map 410 in Figure 8, however as control 430 is set to "City", it is further understood that a city is to be selected as the third geographic location. However, as depicted in Figure 9, "India" can be selected as a fourth geographic location by setting control 430 to "Country" and receiving input data via input device 117 to indicate that the fourth geographic location has been selected, without changing controls 420. In these embodiments, instructions 450 have been updated to indicate that a fourth geographic location for password entry is to be chosen and that an identifier of the fourth geographic location, once selected, can then be temporarily stored in memory device 113 and/or in processing unit 111.

Returning to Figure 2, at step 209, geographic location data 510 is converted to received password data 520 (e.g. as in Figure 5) by assembling the plurality of geographic location data 510 (e.g. the stored identifiers) in any suitable manner. In some embodiments, step 209 can be initiated upon actuation of button 460. In other embodiments, computing device 101 can be enabled to receive a given number of geographic locations, and once the given number of geographic locations is received, step 209 is initiated.

In any event, in some embodiments, to convert geographic location data 510 to received password data 520, the geographic location data 510 can be concatenated in the sequence in which they were received: e.g. "AfricaMexicoDhumaIndia". It is understood that such concatenation can occur concurrently with step 207 as each identifier is received. While in exemplary embodiments, geographic locations data 510 comprises identifiers of four geographic locations, the number of geographic locations is not to be considered particularly limiting. Indeed, it is understood that the higher number of geographic locations, the greater the security of access control. Furthermore, while the identifiers of the geographic locations in the exemplary embodiments are the names of the geographic locations, in other embodiments, other identifiers, as described above, can be used.

In other embodiments, to convert geographic location data 510 to received password data 520, geographic location data 510 is processed using any suitable hash function such that received password data 520 comprises output from the hash function. Any suitable hash function can be utilized, including but not limited to cyclic redundancy checks, checksums, non-cryptographic hash functions, cryptographic hash functions and the like. For example, in an exemplary embodiment, geographic location data 510 "AfricaMexicoDhumaIndia" can be converted to a suitable hash value using any suitable hash function.

In yet further embodiments, to convert geographic location data 510 to received password data 520, received password data 520 is retrieved from a lookup table using geographic location data 510. For example, each geographic location from map 410 can be associated with password data in a lookup table; in some embodiments map data 125 comprises a lookup table in which associations between geographic locations and password data are stored. A non-limiting example of a lookup table is provided in Table 1:

| | |
|---|---|
| [0059]Geographic Location | [0060] Password Data |
| [0061]Africa | [0062]Asdlka;lskd |
| [0063] Egypt | [0064]Sldkf0980sd |
| [0065]Cairo | [0066]L;kv098xv |
| [0067] Mexico | [0068];09dfkljlk7z;l |
| [0069]Dhuma | [0070]][0-sdjf098sdf |
| [0071]India | [0072]Inv77823409is |

While Table 1 is arranged in rows and columns, it is understood that the format of Table 1 is generally non-limiting and any suitable format is within the scope of present embodiments. Furthermore, each "Geographic Location" is associated with respective "Password Data" in a one-to-one relationship. Furthermore, while "Password Data" for only "Africa", "Egypt", "Cairo", "Mexico", "Dhuma" and "India" are provided in Table 1, it is understood that a lookup table can comprise "Password Data" for each geographic location stored within map data 125. Each respective "Password Data" can comprise a string of random and/or pseudo-random alphanumeric characters. Hence, to convert geographic location data 510 to received password data 520, each geographic location within the geographic location data 510 is substituted with respective "Password Data" from Table 1. In the example above, geographic location data 510 "AfricaMexicoDhumaIndia" can be converted to received password data 520: "Asdlka;Iskd;09dfkljlk7z;I][0-sdjf098sdf Inv77823409is". In this way, received password data 520 is provided with no discernable combination of letters that can be identified as a place name. In some of these embodiments, a suitable hash function can then be applied to the "Password Data" before or after the substitution has occurred, as desired.

A lookup table, such as that provided in Table 1, can be provisioned at computing device 101 using any suitable method, for example incorporated into map data 125, with "Password Data" generated in any suitable manner: for example, each "Password Data" can be randomly (or pseudo- randomly) generated and then randomly (or pseudo-randomly) assigned to each geographic location in map data 125.

At step 211 received password data 520 is compared to access password data 123, by processing unit 111. If a match is found, access to computing device 101 is granted at step 213. If not, access to computing device 101 is denied at step 215. In some embodiments, after step 215, method 200 can be repeated, starting at step 207 (or alternatively at step 201) such that further geographic location data can be received, representative of a second attempt to access computing device 101.

Attention is now directed to Figure 11, in which depicts a method 1100 for provisioning access password data 123. In order to assist in the explanation of the method 1100, it will be assumed that the method 1100 is performed using the computing device 101. Furthermore, the following discussion of the method 1100 will lead to a further understanding of the computing device 101 and its various components. However, it is to be understood that the computing device 101 and/or the method 1100 can be varied, and need not work exactly as discussed herein in conjunction with each other, and that such variations are within the scope of present embodiments.

In the following description of method 1100, it is understood that provisioning of access password 123 can occur during an initial provisioning of computing device 101 and/or when access password 123 is to be changed and/or updated.

At step 1103 and 1105, map data 125 is retrieved and processing unit 111 controls display device 115 to provide a representation of a password entry screen, similar to representation 400 and including map 410 rendered from map data 125. Steps 1103 and 1105 are similar to step 203 and 205 of method 200.

At step 1107, geographic location provisioning data is received, the geographic location provisioning data representative of a sequence of geographic locations selected from map 410. In general step 1107 is similar to step 207 of method 200 and geographic location provisioning data is similar to geographic location data 510.

At an optional step 1108, the complexity of the geographic location provisioning data is checked. For example, in some embodiments, a level of complexity can be defined within computing device 101 such that the geographic location provisioning data can be required to include at least a given number geographic locations. In other embodiments, a required given complexity can be defined within computing device 101 such that the geographic location provisioning data can be required to include at least a given number of each classification of geographic locations. For example, if access password 123 is based on two or three geographic locations in geographic provisioning data, access to computing device 101 could be easy to breach by malicious software. Similarly, if access password 123 is based solely on geographic locations comprising only continents, of which there are only seven, access to computing device 101 could also be easy to breach by malicious software. Hence, in some embodiments, a required given complexity can be defined such that that geographic location provisioning data can be required to include at least a given number of each classification of geographic locations. For example, an access password 123 based on at least one continent (of which there are seven), at least one country (of which there are several hundred and/or as defined within data 125), and at least one city (of which there are thousands and/or as defined within data 125) is more secure than if access password 123 is based on several continents.

A required given complexity can also be based on geographic location provisioning data including geographic features from different continents and/or different countries. For example, if geographic location provisioning data comprises "NorthAmericaCanada0ntarioToronto", malicious software could attempt to gain access to computing device 101 by entering geographic locations, within method 200, based on defined relationships between them (i.e. Toronto is located in Ontario, which is located in Canada, which is located in North America).

A given level of complexity can be defined by at least one of a user provisioning access password 123, a system administrator, or as a default level of complexity within access control software 120.

Hence, if a required given complexity is defined in computing device 101, at step 1108, the geographic location provisioning data is checked to ensure it meets complexity requirements. If not steps 1107 and 1108 are repeated until the geographic location provisioning data meets complexity requirements. If so, then at step 1109, the geographic location provisioning data is converted access password data 123 by at least one of by at least one of concatenating the geographic location provisioning data and applying a hash function to the geographic provisioning location data, similar to step 209 of method 200. It is understood that the hash function utilized in method 1100 is the same hash function as that utilized in method 200. Then, at step 1110, access password data 123 is stored in memory device 113.

Hence, present embodiments provide a rendered map, in exemplary embodiments a rendered globe, which contains data defining continents, countries, landmarks, and towns/cities, and the like. The map/globe can be manipulated via touch or mechanical interface to view the map/globe and zoom through several levels of detail. The zoom levels can include, but is not limited to, continents, countries, towns/cities, and the like, and may be expanded to a final level of detail to include pre defined landmarks within cities or towns. This provides a map/globe with several layers of data of increasing complexity, represented visually, which is easier to remember than complex strings of numbers, letters, and characters. A sequence of geographical locations can then be selected which ranges in complexity using continents, countries, towns/cities, and landmarks/streets to form a unique combination which can be stored. Once this data has been stored a locked computer system can be unlocked by repeating the sequence of continents, countries, cities/town, street names, and landmarks. This authentication method can have several predefined levels of complexity either defined by the user via a software option, a system administrator, or as defaults within access control software.

Those skilled in the art will appreciate that in some embodiments, the functionality of computing device 101 can be implemented using pre-programmed hardware or firmware elements (e.g., application specific integrated circuits (ASICs), electrically erasable programmable read-only memories (EEPROMs), etc.), or other related components. In other embodiments, the functionality of computing device 101 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for controlling access to a computing device (101) comprising a memory device (113), a display device (115), and an input device (117), the method comprising:
retrieving, from said memory device (113), data for rendering a map;
controlling said display device (115) to render said map using said data;
receiving, via said input device (117), geographic location data representative of a sequence of geographic locations selected from said map;
converting said geographic location data to received password data; and
comparing said received password data to stored password data; and, if a match is found,
granting access to said computing device (101).

2. The method of claim 1, wherein said converting said geographic location data to said received password data comprises at least one of concatenating said geographic location data, applying a hash function to said geographic location data, and retrieving said received password data from a lookup table using said geographic location data.

3. The method of any of claims 1 and 2, wherein said map comprises a rendered globe.

4. The method of any of claims 1 to 3, further comprising at least one of controlling said display device (115) to provide a representation of controls for navigating said map, and controlling said display device (115) to provide a representation of controls for indicating a classification of each geographic location in said sequence of geographic locations.

5. The method of claim 4, wherein said controls for indicating a classification of each said geographic location comprise at least one of a slider, and at least one pulldown menu.

6. The method of claim 4, wherein said classification comprises at least one of Continent, Country, State, Province, City and Geographic Landmark.

7. The method of any of claims 1 to 6, wherein receiving said geographic location data comprises receiving a plurality of display device (115) coordinates from said input device (117) and converting said display screen coordinates to said geographic location data based on said data for rendering said map.

8. The method of any of claims 1 to 7, wherein said geographic location data comprises at least one of names of said geographic locations, coordinates identifying a point on said map, data identifying an area of said map, and data identifying hotzones on said map.

9. The method of any of claims 1 to 8, further comprising controlling said display device (115) to provide a sequence of prompts, each prompt of said sequence of prompts requesting entry of a respective geographic location in said sequence of geographic locations, each prompt of said sequence of prompts comprising a respective ordinal indication..

10. The method of any of claims 1 to 9, further comprising a provisioning process for
determining said access password data, said provisioning process comprising:
receiving geographic location provisioning data representative of said sequence of geographic locations selected from said map;
converting said geographic location provisioning data to said access password data by at least one of concatenating said geographic provisioning location data, applying a hash function to said geographic provisioning location data,
and retrieving said received password data from a lookup table using said geographic location data; and
storing said access password data.

11. A computing device (101) configured for controlled access, the computing device (101) comprising:
a processing unit interconnected with a memory device (113), a display device (115) and an input device (117), said processing unit enabled to implement the steps of the method of claims 1 to 10.

12. A computer-readable medium comprising program instructions for causing a
computing device (101) to control access there to, the computing device (101) comprising a memory device (113), a display device (115), and an input device (117), the program instructions for controlling the computing device (101) to implement the steps of the method of claims 1 to 10.

## Amended claims

### Amended claims in accordance with Rule 137(2) EPC.

**1.** A method for controlling access to a computing device (101) comprising a memory device (113), a display device (115), and an input device (117), the method comprising:
retrieving, from said memory device (113), data for rendering a map;
controlling said display device (115) to render said map using said data;
receiving, via said input device (117), geographic location data representative of a sequence of geographic locations selected from said map, wherein said geographic location data comprises names of said geographic locations, and receiving said geographic location data comprises, for each said geographic location, receiving input data to control display device to position said map on each said geographic location and receiving input data indicative of each said geographic location via said input device;
converting said geographic location data to received password data; and
comparing said received password data to stored password data; and, if a match is found,
granting access to said computing device (101).

**2.** The method of claim 1, wherein said converting said geographic location data to said received password data comprises at least one of concatenating said geographic location data, applying a hash function to said geographic location data, and retrieving said received password data from a lookup table using said geographic location data.

**3.** The method of any of claims 1 and 2, wherein said map comprises a rendered globe.

**4.** The method of any of claims 1 to 3, further comprising at least one of controlling said display device (115) to provide a representation of controls for navigating said map, and controlling said display device (115) to provide a representation of controls for indicating a classification of each geographic location in said sequence of geographic locations.

**5.** The method of claim 4, wherein said controls for indicating a classification of each said geographic location comprise at least one of a slider, and at least one pulldown menu.

**6.** The method of claim 4, wherein said classification comprises at least one of Continent, Country, State, Province, City and Geographic Landmark.

**7.** The method of any of claims 1 to 6, wherein receiving said geographic location data comprises receiving a plurality of display device (115) coordinates from said input device (117) and converting said display screen coordinates to said geographic location data based on said data for rendering said map.

**8.** The method of any of claims 1 to 7, wherein said geographic location data further comprises at least one of coordinates identifying a point on said map, data identifying an area of said map, and data identifying hotzones on said map.

**9.** The method of any of claims 1 to 8, further comprising controlling said display device (115) to provide a sequence of prompts, each prompt of said sequence of prompts requesting entry of a respective geographic location in said sequence of geographic locations, each prompt of said sequence of prompts comprising a respective ordinal indication.

**10.** The method of any of claims 1 to 9, further comprising a provisioning process for determining said access password data, said provisioning process comprising:
receiving geographic location provisioning data representative of said sequence of geographic locations selected from said map;
converting said geographic location provisioning data to said access password data by at least one of concatenating said geographic provisioning location data, applying a hash function to said geographic provisioning location data, and retrieving said received password data from a lookup table using said geographic location data; and
storing said access password data.

**11.** A computing device (101) configured for controlled access, the computing device (101) comprising:
a processing unit interconnected with a memory device (113), a display device (115) and an input device (117), said processing unit enabled to implement the steps of the method of claims 1 to 10.

**12.** A computer-readable medium comprising program instructions for causing a computing device (101) to control access there to, the computing device (101) comprising a memory device (113), a display device (115), and an input device (117), the program instructions for controlling the computing device (101) to implement the steps of the method of claims 1 to 10.
